# EUROPÄISCHE PATENTANMELDUNG

(11) **EP 3 133 718 A1**
(43) Veröffentlichungstag der Anmeldung: **22.02.2017**
(21) Anmeldenummer: 16169686.9
(22) Anmeldetag: 31.07.2013
(51) Int. Cl.: H02K 1/14, H02K 21/12, H02K 21/24, H02K 21/14, H02K 29/03

(54) **STATOR FÜR EINE ELEKTRISCHE MASCHINE, ELEKTRISCHE MASCHINE SOWIE VERFAHREN ZUM ZUSAMMENBAUEN EINER ELEKTRISCHEN MASCHINE**

(30) Priorität: 03.08.2012 DE 102012015210
(62) Teilanmeldung aus: 13753086.1
(71) Anmelder: GKN Sinter Metals Holding GmbH, 42477 Radevormwald (DE)
(72) Erfinder: Pütz, Thomas, 53501 Grafschaft (DE); Schmitt, Rainer, 53343 Wachtberg (DE); Aydin, Ümit, 53343 Wachtberg (DE); Casellas, Antonio, 53721 Siegburg (DE)
(74) Vertreter: Rössler, Matthias

(57) **Zusammenfassung**

Die Erfindung betrifft einen Stator für eine elektrische Maschine mit wenigstens einem Rotor, Der Stator ist hierbel als mit wenigstens einem Durchbruch versehener Körper ausgebildet, der wenigstens einen ferromagnetischen Werkstoff aufweist. Der Stator weist weiterhin auf:
- wenigstens einen als Statorpolträger ausgebildeten Bereich, welcher wenigstens teilweise eine Mittelachse des Stators umringt,
- wenigstens einen ersten Statorpol mit wenigstens einer ersten Flanke und einer zweiten Flanke, sowie
- wenigstens einen zweiten Statorpol.

Die Statorpole sind hierbei bevorzugt im Wesentlichen entlang einer Radialrichtung weisend gerichtet, unmittelbar oder mittelbar an dem Statorpolträger angeordnet. Als weiteres betrifft die Erfindung eine elektrische Maschine, die wenigstens ein Statorpaar aus einem ersten Stator und einem zweiten Stator umfasst. Desweiteren betrifft die Erfindung ein Verfahren zum Zusammenbauen einer elektrischen Maschine.

## Beschreibung

Die Erfindung betrifft einen Stator für eine zusammensetzbare elektrische Maschine mit wenigstens einem Rotor, wobei der Stator als mit wenigstens einem Durchbruch versehene Scheibe ausgebildet ist, Weiterhin betrifft die Erfindung eine elektrische Maschine sowie eine Verfahren zum Zusammenbauen einer rohrförmigen elektrischen Maschine.

Es ist bekannt, elektrische Maschinen aus einem Rotor, den Rotor umgebenden Statoren sowie eine den Rotor umgebene Wicklung, zumeist aus mit Isoliermaterial versehenen Kupferdraht, zu konstruieren. Ein Beispiel für solche elektrische Maschinen sind Transversalflussmaschinen. Solche elektrische Maschinen können jedoch den Nachteil aufweisen, dass die Leistungsdichte bauartbedingt gegenüber einem theoretischen Optimalwert reduziert ist. Gründe hierfür können unter anderem darin liegen, dass die Wicklungen Wickelköpfe aufweisen und/oder in fertigungstechnologisch begründeten Toleranzen begründet sein.

Der Erfindung liegt die Aufgabe zu Grunde, die Leistungsdichte solcher elektrischer Maschinen zu erhöhen.

Die Aufgabe wird mit einem Stator für eine zusammensetzbare elektrische Maschine mit den Merkmalen des Anspruchs 1, mit einer elektrischen Maschine mit den Merkmalen des Anspruchs 12 sowie mit einem Verfahren zum Zusammenbauen einer elektrischen Maschine mit den Merkmalen des Anspruchs 16 gelöst. Weitere vorteilhafte Ausgestaltungen und Weiterbildungen gehen aus der nachfolgenden Beschreibung hervor. Ein oder mehrere Merkmale aus den Ansprüchen, der Beschreibung wie auch den Figuren können mit ein oder mehreren anderen Merkmalen daraus zu weiteren Ausgestaltungen der Erfindung verknüpft werden. Insbesondere können auch ein oder mehrere Merkmale aus den unabhängigen Ansprüchen durch ein oder mehre Merkmale aus der nachfolgenden Beschreibung ersetzt werden. Der vorgeschlagene Gegenstand ist nur als ein erster Entwurf zur Formulierung des Gegenstands aufzufassen, ohne diesen jedoch zu beschränken.

Es ist ein Stator für eine zusammensetzbare elektrische Maschine vorgesehen. Die elektrische Maschine soll hierbei wenigstens einen Rotor aufweisen, Es ist vorgesehen, dass der Stator als mit wenigstens einem Durchbruch versehener Körper ausgebildet ist, wobei der Stator wenigstens einen ferromagnetischen Werkstoff aufweist. Weiterhin ist vorgesehen, dass der Stator aufweist:
- wenigstens einen als Statorpolträger ausgebildeten Bereich, welcher wenigstens teilweise eine Mittelachse des Stators umringt.
- wenigstens einen ersten Statorpol mit wenigstens einer ersten Flanke und einer zweiten Flanke, sowie
- wenigstens einen zwelten Statorpol.

Hierbei sind die Statorpole unmittelbar oder mittelbar an dem Statorpolträger angeordnet.

In einer Ausgestaltung des Stators kann vorgesehen sein, dass der als Statorpolträger ausgebildete Bereich die Mittelachse des Stators vollständig umringt.

In einer Ausgestaltung ist vorgesehen, dass die Statorpole im Wesentlichen entlang einer Radialrichtung weisend gerichtet an dem Statorpolträger angeordnet sind.

Der Begriff der elektrischen Maschine bezeichnet beispielsweise eine Maschine, welche elektrische Energie in mechanische Energie oder mechanische Energie in elektrische Energie wandelt. Beispielsweise kann eine solche elektrische Maschine ein Motor und/oder Generator sein. Ein anderes Beispiel für eine elektrische Maschine ist beispielsweise ein Transformator zur ausschließlichen Umwandlung von elektrischer Energie.

Es kann Insbesondere vorgesehen sein, dass die elektrische Maschine ein Transversalflussgenerator Ist. Weiterhin kann vorgesehen sein, dass die elektrische Maschine ein Transversalflussmotor ist.

Es ist Insbesondere vorgesehen, dass der Stator als Stator für eine elektrische Maschine in Ausbildung einer elektrischen Maschine zur Umwandlung von elektrischer Energie in mechanische Energie vorgesehen ist. Insbesondere Ist vorgesehen, dass der Stator als Stator für eine rotierende elektrische Maschine vorgesehen Ist, welche für eine Umformung von elektrischer Energie in eine rotatorische Bewegung vorgesehen ist, Es kann jedoch ebenfalls vorgesehen sein, dass - als Grenzfall einer rotierenden elektrischen Maschine mit einem unendlich großen Krümmungsradius - der Stator als Stator für eine elektrische Maschine mit translatorischer Bewegung, als so genannter "elektrischer Linearmotor", vorgesehen ist,

Der Begriff des Rotors kann beispielsweise einen scheibenförmigen Körper bezeichnen, welcher, lösbar oder unlösbar, mit einer Welle verbunden ist. Der Rotor kann hierbei beispielsweise als Scheibe mit einer kreisförmigen Grundfläche ausgestaltet sein, an welcher in einem rechten Winkel zur Oberfläche dieser Grundfläche eine Welle angeordnet Ist.

Der Stator ist als ein mit einem Durchbruch versehener Körper vorgesehen. Als Durchbruch wird sich hierbei auf ein den Körper vollständig von einer Seite zu einer anderen Seite durchlaufendes Loch bezogen, Der Durchbruch dient dabei einerseits einer möglichen Durchführbarkeit der Welle sowie andererseits einer Trennung des wenigstens ersten Statorpols von dem wenigstens zweiten Statorpols. Es kann weiterhin vorgesehen sein, dass der Stator wenigstens zwei Durchbrüche aufweist. In einer Ausgestaltung kann vorgesehen sein, dass der Körper als scheibenähnlicher Körper ausgebildet ist. Eine Ausbildung eines Körpers als scheibenähnlicher Körper bezeichnet hierbei einen Körper, welcher In zwei zueinander orthogonalen Richtungen des Raumes unterschiedliche Größenordnungen der Ausdehnung aufweist. Beispielsweise kann vorgesehen sein, dass der Körper als scheibenähnlicher Körper mit einer im wesentlichen kreisförmigen Grundfläche ausgebildet ist. Hierbei kann insbesondere vorgesehen sein, dass die Höhe des Körpers geringer ist als der Radius des scheibenähnlichen Körpers. Die Bezeichnung einer schreibenähnlichen Ausbildung bezieht sich hierbei darauf, dass eine äußere Mantelfläche sowie deren Begrenzungslinien einen scheibenähnlichen Körper umschreiben; es ist kann jedoch außerdem mit umfasst sein, dass in einem Inneren des Körpers weitere Strukturen und/oder Durchbrüche angeordnet sind.

Der Begriff des ferromagnetischen Werkstoffs bezeichnet Werkstoffe, welche eine signifikante ferromagnetische Suszeptibilltät aufweisen, die deutlich größer als 1 ist. Insbesondere können als ferromagnetische Werkstoffe Eisen, Nickel, Kobalt oder Legierungen, welche Elsen, Nickel und/oder Kobalt aufweisen, umfassen. Weitere Beispiele sind beispielsweise ferritische Stähle sowie nicht gesinterte und/oder gesinterte ferromagnetische Werkstoffe. Der Stator kann hierbei einen ferromagnetischen Werkstoff aufweisen oder auch mehr als ein ferromagnetischen Werkstoff aufweisen. Hierbei können unterschiedliche ferromagnetische Werkstoffe als homogenes oder heterogenes Gemenge angeordnet sein, es kann jedoch auch eine unregelmäßige oder regelmäßige Anordnung von ferromagnetischen Werkstoffen und/oder ferromagnetischen und nicht nichtferromagnetischen Werkstoffen dem Stator umfasst sein.

Der Begriff des Statorpolträgers bezeichnet einen Bereich des Stators, an welchem eine Anordnung der Statorpole vorgesehen ist. Hierbei kann beispielsweise vorgesehen sein, dass ein Umfang des Stators als Statorpolträger funglert. Es ist vorgesehen, dass die Statorpole an dem Statorpolträger und von diesem weggerichtet angeordnet sind. Hierbei ist vorgesehen, dass die Statorpole im Wesentlichen entlang einer Radialrichtung weisend gerichtet sind. Die Begrifflichkeit einer Im Wesentlichen entlang einer Radialrichtung gerichteten Orientierung umfasst insbesondere, dass die Statorpole wenigstens Bereiche umfassen, welche zu der Mittelachse des Stators hin gerichtet sind und/oder die Statorpole wenigstens Bereiche umfassen, welche von der Mittelachse des Stators wegweisend gerichtet sind. Beispielsweise kann vorgesehen sein, dass eine Anzahl von Statorpolen Im Wesentlichen zu der Mittelachse des Stators hin gerichtet ist und eine Anzahl von weiteren Statorpolen im Wesentlichen von der Mittelachse des Stators weggerichtet Ist. Weiterhin kann vorgesehen sein, dass aile Statorpole, welche von dem Stator umfasst werden, im Wesentlichen zu der Mittelachse des Stators hin gerichtet sind. In einer weiteren Ausgestaltung eines Stators kann vorgesehen sein, dass alle Statorpole von der Mittelachse des Stators wegweisend gerichtet sind. In einer Ausgestaltung des Stators als Körper mit einer kreisförmigen Grundfläche entspricht die Mittelachse des Stators der Rotationsachse dieses Körpers. In Fällen, in welchem der Stator keine kreisförmige Grundfläche aufweist, kann vorgesehen sein, dass die Mittelachse als Schwerpunkt, beispielsweise als geometrische Schwerpunkt, der Grundfläche des Stators ausgebildet ist.

Es ist vorgesehen, dass die Statorpole an dem Statorpolträger angeordnet sind. Hierbei können die Statorpole beispielsweise unmittelbar an dem Statorpolträger angeordnet sein, es kann jedoch beispielsweise ebenfalls vorgesehen sein, dass die Statorpole mittels eines Zwischenbereichs oder mehrerer Zwischenbereiche an dem Statorpolträger angeordnet sind. Dieser Zwischenbereich kann sich beispielsweise In einem Querschnitt und/oder einem Material von dem dann angrenzenden Statorpol und/oder Statorpolträger unterscheiden. Eine Anordnung der Statorpole an den Statorpolträgern kann hierbei stoffschlüssig oder nicht stoffschlüssig vorgesehen sein.

Es kann weiterhin vorgesehen sein, dass der Stator als Stator für eine reversibel zusammensetzbare elektrische Maschine ausgebildet ist.

In einer weiteren Ausgestaltung des Stators ist vorgesehen, dass der erste Statorpol zu jeder die Mittelachse des Stators enthaltenden Ebene asymmetrisch ist und mit zunehmendem Abstand von dem Statorpolträger sich von dieser Ebene im Wesentlichen fortbiegend gekrümmt ist.

Eine solche asymmetrische Konfiguration eines Statorpols, mehrerer Statorpole und/oder aller Statorpole hat unter anderem Auswirkungen auf den Drehmomentverlauf während jeweiliger Umdrehungen des Rotors einer elektrischen Maschine zur Folge. Somit ist es beispielsweise möglich, ein Drehmomentprofil innerhalb jeweils einer vollständigen Umdrehung des Rotors maßzuschneidern. Beispielsweise kann vorgesehen sein, dass die asymmetrische Anordnung eines Statorpols, mehrerer Statorpole und/oder aller Statorpole durch Auslegung dahingehend optimiert werden kann, dass eine Umwandlung einer Drehbewegung In eine lineare Bewegung bewirkt wird.

In einer weiteren Ausgestaltung des Stators ist die erste Flanke und/oder die zweite Flanke über wenigstens einen Höhenbereich des ersten Statorpols gegenüber der Mittelachse des Stators abgeschrägt. Die Abschrägung ist hierbei In diskretem oder kontinuierlichem Verlauf oder einer Kombination aus beidem ausgebildet.

In einer Ausgestaltung des Stators, in welcher beide Flanken wenigstens eines Statorpols abgeschrägt sind, kann diese Abschrägung an beiden Flanken gleich oder unterschiedlich sein. Des weiteren kann vorgesehen sein, dass die Abschrägung an der ersten Flanke und die Abschrägung an der zwelten Flanke mit zunehmender Nähe der der Abschrägung näheren Stirnseite des Stators zu einer Verjüngung des Statorpols führt. In einer anderen Ausgestaltung des Stators kann vorgesehen sein, dass die Abschrägung an der ersten Flanke und die Abschrägung an der zweiten Flanke mit zunehmender Nähe der der Abschrägung näheren Stirnseite des Stators zu einer Verbreiterung des Statorpols führt. Weiterhin kann möglich sein, dass die Breite des Stators in zu der Mittelachse des Stators senkrechter Richtung trotz Abschrägung an beiden Flanken konstant bleibt aufgrund von Parallelität der ersten Flanke und der zweiten Flanke.

Vorteil einer Abschrägung der ersten Flanke und/oder der zweiten Flanke des ersten Statorpols gegenüber der Mittelachse des Stators ist beispielsweise, dass ein einer Bewegung eines Rotors entgegenwirkender Rastmoment reduziert oder gar vermieden, das heißt auf einen Wert von nahezu Null reduziert, wird. Bei einer Betrachtung eines Abschrägewinkels gegenüber einer die Mittelachse des Staates enthaltenen Ebene kann eine Abschrägung insbesondere als Abschrägung mit Abschrägewinkeln von weniger als 10° vorgesehen sein. Insbesondere kann vorgesehen sein, dass die Abschrägewinkel weniger als 5° beträgt. In einer bevorzugten Ausführungsform sind Abschrägewinkel von weniger als 2°, besonders bevorzugt von etwa 0,9°-1,0°, vorgesehen.

In einer weiteren Ausgestaltung des Stators kann beispielsweise vorgesehen sein, dass das Verhältnis eines entlang einer Axialrichtung gerichteten mit einer Abschrägung versehenen Höhenbereichs zu einer in eine Axialrichtung gerichteten Gesamthöhe 1;4 beträgt.

In einer weiteren Ausgestaltung kann vorgesehen sein, dass mit einer Abschrägung versehene Statorpole regelmäßig abwechselnd mit nicht mit einer Abschrägung versehenen Statorpolen an dem Stator angeordnet sind.

Weiterhin kann vorgesehen sein, dass einer oder mehrere Statorpole auf nur einer einzigen Stirnseite des Stators Abschrägungen aufweisen. In einer anderen Ausgestaltung kann hingegen beispielsweise vorgesehen sein, dass die Statorpole auf beiden Stirnseiten des Stators Abschrägungen aufweisen.

In einer weiteren Ausgestaltung des Stators korrespondiert wenigstens eine stirnseitige Schnittfläche des ersten Statorpols mit wenigstens mit einer stirnseitigen Schnittfläche eines hartmagnetischen Bereichs des Rotors.

In einer Ausgestaltung des Stators kann vorgesehen sein, dass eine korrespondierende stirnseitige Schnittfläche des ersten Statorpols wenigstens bereichsweise mit einer in stirnseitigen Schnittfläche eines hartmagnetischen Bereichs des Rotor im Wesentlichen identisch ist. In einer speziellen Ausgestaltung ist die stirnseitige Schnittfläche des ersten Statorpols mit wenigstens einer stirnseitigen Schnittfläche eines hartmagnetischen Bereichs des Rotor identisch, wobei identisch im Sinne von weitgehend deckungsähnlich zu verstehen ist. Vorteil einer weitgehend deckungsähnlichen Ausführung einer stirnseitigen Schnittfläche des ersten Statorpols mit einer stirnseitigen Schnittfläche des hartmagnetischen Bereichs des Rotors ist beispielsweise, dass der Rastmoment reduziert wird. Ein weiterer Vorteil kann darin bestehen , dass in einem Betrieb einer den Stator aufweisenden elektrischen Maschine ein Erreichen eines idealen sinusförmigen Spannungsverlaufs nahezu erreicht wird, so dass ein zusätzliches Filtern des Spannungsverlaufs nicht mehr vonnöten ist.

Beispielsweise kann vorgesehen sein, dass eine senkrecht zu einer Längsachse des Stators senkrechte Schnittfläche des ersten Statorpols mit wenigstrens einer stirnseitigen Schnittfläche eines hartmagnetischen Bereichs des Rotors korrespondiert und dass die Schnittfläche eine axiale Erstreckung des Stators halbiert.

Weiterhin kann beispielsweise vorgesehen sein, dass jeder Statorpol des Stators mit einer stirnseitigen Schnittfläche eines hartmagnetischen Bereichs des Rotors korrespondiert. Hierbei kann vorgesehen sein, dass zusätzlich zu einer Korrespondenz einer stirnseitigen Schnittfläche auch die relative Position der Statorpole des Stators zueinander mit der relativen Position der hartmagnetischen Bereiche zueinander korrespondiert.

In einer weiteren Ausbildung des Stators kann vorgesehen sein, dass die Dichte des Stators ortsabhängig eingestellt ist für eine Bereitstellung eines eingestellt ortsabhängigen magnetischen Widerstands. Hierdurch kann erreicht werden, dass auch bei Verwendung eines gleichen Materials lediglich durch Veränderung der Dichte dieses gleichen Materials die ferromagnetische Permeabilität hält und hierdurch unmittelbar der ferromagnetische Widerstand eingestellt werden können. Eine Einstellung des ferromagnetischen Widerstands hat wiederum zur Folge, dass der Verlauf der von ferromagnetischen Feldlinien innerhalb des Stators eingesteilt werden kann, da dieser einen Verlauf entsprechend des Prinzips der Energieminlmierung einnimmt.

Beispielsweise kann vorgesehen sein, dass bei Ausgestaltung des Stators als Stator aus einem Werkstoff mit einer theoretischen Dichte von 7,7 g cm⁻³ jeder Statorpol im arithmetischen Mittel eine Dichte von 7,5 g cm⁻³ aufweist, während der als Statorpolträger vorgesehene Bereich im arithmetischen Mittel eine Dichte von 7,2 g cm⁻³ aufweist, wobei als theoretische Dichte die Dichte eines als perfekt gedachten Einkristalls des verwendeten weichmagnetischen Materials bezeichnet ist.

In einer weiteren Ausbildung des Stators ist vorgesehen, dass ein Bereich des Stators, der die Mittelachse des Stators wenigstens teilweise umringt, eine gegenüber wenigstens einem an diesen Bereich angrenzenden Nachbarbereich verringerte Höhe zur zumindest teilweisen Aufnahme von wenigstens einer Wicklung aufweist. Beispielsweise kann vorgesehen sein, dass eine umlaufende Nut in einem Bereich zwischen der Mittelachse des Stators und dem Statorpolträger vorgesehen ist. Insbesondere kann vorgesehen sein, dass eine teilweise umlaufende Nut oder eine vollständig umlaufende Nut in einem Bereich zwischen den Statorpolen und dem Statorpolträger vorgesehen ist, so dass Raum zur Verfügung gestellt wird, welcher für eine Aufnahme einer Wicklung geeignet ist und diese Wicklung sodann die Statorpole wenigstens bereichsweise sowie den Rotor, ebenfalls zumindest bereichsweise, umfassen kann.

In einer weiteren Ausbildung des Stators kann vorgesehen sein, dass der Statorpolträger wenigstens bereichsweise wenigstens eine Aussparung und/oder wenigstens einen Vorsprung aufweist. Hierbei kann vorgesehen sein, dass die Aussparung und/oder der Vorsprung bevorzugt im Wesentlichen in eine zur Mittelachse parallelen Richtung orientiert sind. Diese Aussparungen und/oder Vorsprung können beispielsweise in Form von Zähnen, in Form von Zacken, in Form von Halbkreisen, in Form von Ellipsen oder aber In Kombinationen hieraus oder ähnlichen Gestaltungen wie auch jeder anderen beliebigen Form vorgesehen sein. Weiterhin kann vorgesehen sein, dass der Stator wenigstens eine Aussparung und/oder wenigstens einen Vorsprung lediglich auf einer Stirnseite, auf einer anderen Stirnseite oder aber oft belden Stirnseiten aufweist. Die Anordnung der Aussparung und/oder des Vorsprungs kann hierbei entsprechend einer vorgesehenen Anordnung der Statoren erfolgen. Beispielsweise kann bei einer vorgesehenen Anordnung einer vorderseitigen Stirnseite eines ersten Stators mit einer rückseitigen Stirnkante eines anderen Stators eine entsprechend korrespondierende Anordnung von Vorsprüngen und/oder Aussparungen an der vorderseitigen Stirnseite des einen Stators mit korrespondierenden Aussparungen und/oder Vorsprüngen an der rückseitigen Stirnseite des anderen Stators erfolgen. Desweiteren kann eine Winkelverteilung bzw, eine Beabstandung der Vorsprünge und/oder Aussparungen an einer Stirnseite Jeweils eines Stators entsprechend einer gewünschten Möglichkeit zur Einstellung von Phasenverschiebungen erfolgen.

In einer weiteren Ausgestaltung kann der Stator beispielsweise insofern ausgestaltet sein, dass wenigstens der erste Statorpol und der zweite Statorpol über wenigstens eine Strebe miteinander verbunden sind. Hierbei ist die Strebe die Mittelachse des Stators wenigstens teilweise umlaufend angeordnet ist. Die Strebe weist hierbei wenigstens abschnittsweise in eine zur Mittelachse im Wesentlichen parallelen Richtung eine Verjüngung auf. In einer weiteren Ausbildung des Stators kann vorgesehen sein, dass die Strebe die Mittelachse im Wesentlichen koaxial und teilweise umlaufend angeordnet ist und/oder wobei die Strebe wenigstens abschnittsweise über eine gegenüber angrenzenden Bereichen der Strebe verringerte Dichte aufweist.

Ein Vorteil einer wenigstens abschnittsweisen Verjüngung der Strebe in eine zur Mittelachse im Wesentlichen parallelen Richtung Ist, dass ein magnetischer Fehifluss weitgehend verhindert wird beziehungsweise nahezu auf Null reduziert werden kann. Dies wird dadurch bewirkt, dass durch die reduzierte Höhe in dem Bereich der Verjüngung eine magnetische Sättigung des ferromagnetischen Materials schneller erreicht werden kann als in den an die Verjüngung angrenzenden Bereiche des Stators. Durch die magnetische Sättigung entsteht hierdurch im Bereich der Verjüngung eine ferromagnetische Isolierung, welche den magnetischen Fluss zweier jeweils benachbarter Statorpole voneinander trennt.

Ein vergleichbarer Vorteil wird durch eine wenigstens abschnittsweise verringerte Dichte einer Strebe gegenüber angrenzender Bereiche dieser Strebe erreicht. Eine verringerte Dichte entspricht hierbei hinsichtlich des physikalisch erreichten Defekts in analoger Weise der oben beschriebenen Verjüngung der Strebe. Eine Kombination einer solchen Verjüngung der Strebe sowie einer Verringerung der Dichte führt darüber hinaus zu einer weiteren Verstärkung des beschriebenen Effekts.

Desweiteren kann in einer Ausgestaltung des Stators vorgesehen sein, dass eine Winkelverteilung der Statorpole, eine Ausgestaltung der Statorpole und/oder eine Verteilung der Dichte der Statorpole entsprechend eines gewünschten Drehmomentverlaufs während des Verlaufs einer Umdrehung des Rotors eingestellt ist.

In einer weiteren Ausgestaltung des Stators Ist beispielsweise vorgesehen, dass der Stator neun Statorpole aufweist. In einer Ausbildung des Stators ist beispielsweise vorgesehen, dass zwei benachbarte Statorpole um einen Winkel von (120/9)° verdreht sind, wobei eine Verdrehung um diesen Winkel dahingehend zu verstehen ist, dass bei identischer Form dieser benachbarten Statorpole deren Deckung durch eine Rotation um einen Winkel von (120/9)° um die Mittelachse des Stators erreicht werden könnte. In einer anderen Ausgestaltung kann vorgesehen sein, dass zwei benachbarte Statorpole um einen Winkel von (120/6)° verdreht sind. Desweiteren kann in einer weiteren Ausbildung vorgesehen sein, dass der Stator sechs Statorpole aufweist.

In einer weiteren Ausgestaltung kann vorgesehen sein, dass der Stator pulvermetallurgisch aus einem weichmagnetischen Material hergestellt ist. In einer Ausgestaltung des Stators kann vorgesehen sein, dass der Stator pulvermetallurgisch, also wenigstens auch unter Verwendung eines Verfahrens der Pulvermetallurgie, hergestellt ist.

Der Begriff eines weichmagnetischen Materials kennzeichnet hierbei Werkstoffe mit geringen Koerzitivfeldstärken. Hierbei kann vorgesehen sein, dass als welchmagnetische Materialien Materialien mit einer Koerzitivfeldfeldstärke von weniger als 5000 A/m angesehen werden. Insbesondere kann hierbei vorgesehen sein, dass als weichmagnetische Materialien Materialien mit einer Koerzitivfeldfeldstärke von weniger als 1000 A/m angesehen werden. Die angegebenen Koerzitivfeldstärken beziehen sich hierbei jeweils auf den als weichmagnetisch gewünschten Bereich, also gegebenenfalls etwa lediglich auf die Statorpole oder Bereiche der Statorpole. Desweiteren beziehen sich die angegebenen Koerzitivfeldstärken auf die Eigenschaften des fertiggestellten Bauteils.

Insbesondere kann vorgesehen sein, dass der Stator pulvermetallurgisch aus einem weichmagnetischen Material hergestellt ist, welches wenigstens in dem fertiggestellten Zustand des Stators eine Koerzitlvfeldstärke von weniger als 1000 A/m aufweist.

Vorteil einer Herstellung mittels eines pulvermetallurgischen Verfahrens ist es, dass ein Erreichen von engen Toleranzen, insbesondere in der Maßhaltigkeit, erreicht wird, welche für ein Erreichen der Eigenschaften des Stators vonnöten ist.

Insbesondere kann hierbei beispielweise möglich sein, dass der Stator aus einem SMC-Werkstoff hergestellt ist, Weiterhin kann beispielsweise vorgesehen sein, dass der Stator einstückig hergestellt Ist.

Ein Vorteil eines Einsatzes von einem SMC-Werkstoff zur Herstellung des Stators ist, dass der Eisenanteil des Stators reduziert werden kann. Desweiteren kann durch die bereits beschriebene Herstellung des Stators mit hohen Toleranzen bezüglich der Abmessungen sowie die bereits beschriebene Herstellung der Wicklung mit hohen Toleranzen bezüglich der Abmessungen und der daraus folgenden Möglichkeit zur räumlichen Trennung der Phasen voneinander auf weiteres zur Isolierung der Wicklung von dem Stator zu nutzende Material verzichtet werden. Als ein weiterer Vorteil einer Nutzung von SMC-Werkstoff zur Herstellung des Stators ist die Möglichkeit zur leichten Recyclebarkeit durch die gute Eignung der Materialien aus nicht gesintertem SMC-Werkstoff zur Trennung der einzelnen Bestandteile.

In einer weiteren Ausbildung des Verfahrens kann vorgesehen sein, dass wenigstens bereichsweise innerhalb eines zwischen zwei benachbarten Statorpolen befindlichen Raums ein austenitisches Material angeordnet ist. Hierbei kann beispielsweise vorgesehen sein, dass innerhalb eines zwischen zwei benachbarten Statorpolen befindlichen Raums ein austenitischer CrNI-Stahl angeordnet ist. Desweiteren kann beispielsweise vorgesehen sein, dass zwischen zwei benachbarten Statorpolen ein Werkstoff mit einer verringerten Permeabilität im vergleich zu derjenigen der Statorpole vorgesehen ist. Insbesondere kann vorgesehen sein, dass zwischen zwei benachbarten Statorpolen Bereiche mit einem Werkstoff vorgesehen sind, wobei die Permeabilität innerhalb des Bereichs oder über das Volumen des Bereichs gemittelt mit einer Permeabilität von 50 % oder weniger der Permeabilität der Statorpole angeordnet ist.

Ein weiterer Gedanke der Erfindung betrifft eine elektrische Maschine, umfassend wenigstens ein Statorpaar aus einem ersten Stator und einem zweiten Stator. Weiterhin umfasst die elektrische Maschine wenigstens einen in einem durch den ersten Stator und den zweiten Stator geblldeten Hohlraum befindlichen ersten Rotor und wenigstens eine zumindest in einem Bereich einer Höhe des Rotors den Rotor umlaufende metallische Wicklung. Hierbei sind der erste Stator und der zweite Stator relativ zueinander durch wenigstens einen stirnseitig in einem Statorpolträger des ersten Stators befindlichen Vorsprung und/oder Aussparung in Zusammenwirkung mit korrespondierenden stirnseitig in einem Statorpolträger des zweiten Stators befindlichen Vorsprüngen und/oder Aussparungen zueinander winkelposltioniert.

In einer weiteren Ausbildung der elektrischen Maschine kann vorgesehen sein, dass zwischen der Wicklung und dem ersten Stator und/oder der Wicklung und dem zweiten Stator ein Positionierungselement angeordnet ist zur definierten Beanstandung der Wicklung von dem ersten Stator und/oder dem zweiten Stator. Desweiteren kann vorgesehen sein, dass zwischen der Wicklung und dem ersten Stator und/oder der Wicklung und dem zweiten Stator ein Posltionierungselement angeordnet Ist zur definierten Einstellung eines Mindestabstands zwischem dem ersten Stator und der Wicklung und/oder dem zweiten Stator und der Wicklung.

Desweiteren kann vorgesehen sein, dass der Begriff der den Rotor umlaufenden metallischen Wicklung dahingehend zu verstehen ist, dass eine Wicklung entlang einer gleichen Umlauforientierung wie der vorgesehenen Drehrichtung des Rotors vorgesehen ist. Es kann weiterhin vorgesehen sein, dass der Begriff der den Rotor umlaufenden metallischen Wicklung dahingehend zu verstehen ist, dass eine Wicklung entlang einer Umlauforientierung vorgesehen Ist, welcher der vorgesehenen Drehrichtung des Rotors entgegengesetzt ist.

In einer weiteren Ausgestaltung der elektrischen Maschine ist vorgesehen, dass eine Anzahl von wenigstens zwei Statorpaaren hintereinander angeordnet Ist, und dass das erste Statorpaar und das zweite Statorpaar relativ zueinander durch wenigstens einen stirnseitig in einem Statorpolträger des ersten Statorpaars befindlichen als Außenvorsprung ausgebildeten Vorsprung und/oder als Außenaussparung ausgebildete Aussparung in Zusammenwirkung mit korrespondierenden stirnseitig in einem Statorpolträger des zweiten Statorpaars befindlichen als Außenvorsprüngen ausgebildeten Vorsprüngen und/oder als Außenaussparungen ausgebildeten Aussparungen zueinander winkelpositioniert sind, und wobei die Winkelpositionierung zwischen dem ersten Statorpaar und dem zweiten Statorpaar entsprechend einer gewünschten Phasenverschiebung gewählt ist.

Vorteil einer Anordnung von wenigstens zwei Statorpolen hintereinander mittels stirnseitig angebrachten als Außenvorsprüngen ausgebildeten Vorsprüngen und/oder als Außenaussparungen ausgebildeten Aussparungen in Zusammenwirkung mit korrespondierenden stirnseitigen als Außenvorsprüngen ausgebildeten Vorsprüngen und/oder als Außenaussparungen ausgebildeten Aussparungen in einem zweiten Statorpaar ist, dass eine gewünschte Phasenverschiebung derart exakt eingestelit werden kann, dass eine elektronische Phasenverschiebung nicht mehr notwendig ist.

Ein weiterer Vorteil der Verwendung von Statorpaaren mit stirnseltig in einem Statorpolträger eines ersten Stators befindlichem als Außenvorsprung ausgebildeten Vorsprung und/oder als Außenaussparung ausgebildeter Aussparung in Zusammenwirkung mit korrespondierenden stirnseitig in einem Statorpolträger des zweiten Stators befindlichen als Außenvorsprüngen ausgebildeten Vorsprüngen und/oder als Außenaussparungen ausgebildeten Aussparungen ist, dass eine Winkelpositionierung nach einer Hintereinanderanordnung nicht mehr notwendig ist und hierdurch ein wesentlich vereinfachter Zusammenbau der elektrische Maschine erreicht werden kann.

In einer weiteren Ausbildung der elektrischen Maschine kann vorgesehen sein, dass die Anzahl von wenigstens zwei Statorpaaren wenigstens zwei gleiche Statorpaare aufweist.

In einer Ausgestaltung der elektrischen Maschine mit wenigstens zwei gleichen Statorpaaren und wobei diese zwei gleiche Statorpaare jeweils zwei gleiche Statoren umfassen, kann vorgesehen sein, dass das erste und das zweite Statorpaar gegeneinander um den gleichen Winkel verdreht sind wie zwei nebeneinander angeordnete Statorpole jedes dieser Statoren der wenigstens zwei gleichen Statorpaare.

In einer weiteren Ausgestaltung der elektrischen Maschine kann vorgesehen sein, dass die Wicklung als Ringwicklung ausgeführt ist, weitgehend frei von Isoliermaterial Ist und/oder dass die Wicklung nahezu keine Wickelköpfe aufweist, In einer weiteren Ausbildung der elektrischen Maschine kann beispielsweise vorgesehen sein, dass die Wicklung vollständig frei von Isoliermaterial Ist. In einer weiteren Ausbildung der elektrischen Maschine ist vorgesehen, dass die Wicklung keine Wickelköpfe aufweist.

Ein Vorteil einer Ausgestaltung der elektrischen Maschine mit einer Wicklung, welche weitgehend frei von Isoliermaterial ist und/oder nahezu kein Wickelköpfe aufweist ist, dass die Leistungsdichte der elektrischen Maschine erhöht Ist. Vorteil einer Ausbildung der elektrischen Maschine dahingehend, dass die Wicklung keinen Wickelkopf aufweist, ist, dass die Leistungsdichte der elektrische Maschine optimiert ist. Desweiteren wird durch einen möglichen Verzicht auf die in der Regel wenigstens nahezu, in den meisten Fällen vollständig, funktionslosen Wickelköpfen die Menge von für diese einzusetzendes Material reduziert. So wird in vielen Fällen beispielsweise Kupfer oder Kupfer als wesentlichen Bestandteil aufweisende Legierungen als Material für die Wicklungen genutzt, so dass durch eine Möglichkeit eines Verzichts auf Wickelköpfe der Kupferbedarf deutlich verringert werden kann.

Vorteil einer geometrischen Vereinfachung der Wicklung als Ringwicklung ist, dass die Fertigung der Wicklung deutlich vereinfacht ist. Insbesondere durch deutlich größere während einer Hersteillug der Wicklung mögliche Zugkräfte Ist es möglich, den Füllgrad der Wicklung als ganzes deutlich zu erhöhen. So ist es beispielsweise möglich, einen Füllgrad von ungefähr bis zu 90 % zu erreichen, so dass ungefähr bis zu 90 % des Volumens der Wicklung tatsächlich aus dem für die Wicklung verwendeten Werkstoff bestehen und nur ein entsprechend geringer Volumenanteil der Wicklung funktionslos ist. Vorteil des hohen Füllgrades Ist beispielsweise, dass eine Baugrößenreduzierung der Wicklung und in der Folge der elektrischen Maschine sowie in unmittelbarer Konsequenz eine beträchtliche Erhöhung der Leistungsdichte und/oder in Ausführung der elektrischen Maschine als Gleichstrommaschine eine Nutzung von Strömen mit beträchtlich höherer Stromstärke ermöglicht ist, als dies bei in üblicher Wickeltechnik mit auftretenden Wickelköpfen der Fall ist.

In einer weiteren Ausbildung der elektrischen Maschine ist vorgesehen, dass der erste Stator und der zweite Stator eine gleiche Gestalt aufweisen.

Vorteil einer dahingehenden Ausgestaltung des ersten Stators und des zweiten Stators, dass der erste Stator und der zweite Stator eine gleiche Gestalt aufweisen ist, dass die Anzahl von unterschiedlichen herzustellenden Bauteile reduziert wird, und hierdurch das Fertigungsverfahren für eine Herstellung der Statoren für elektrische Maschinen deutlich vereinfacht werden kann. Desweiteren ist eine deutliche Vereinfachung des Fertigungsprozesses, Insbesondere beim Zusammenbau der elektrischen Maschine gegeben.

Ein weiterer Gedanke der Erfindung sieht ein Verfahren zum Zusammenbauen einer , bevorzugt rohrförmigen, elektrischen Maschine mittels wenigstens einem Zusammenbauen eines Statorpaars vor. Das Verfahren zum Zusammenbauen einer rohrförmigen elektrischen Maschine mittels wenigstens einem Zusammenbauen eines Statorpaars erfolgt hierbei, Indem wenigstens die folgenden Schritte erfolgen:
- Positionieren eines Rotors In einen Hohlraum eines ersten Stators,
- Positionieren einer metallischen Wicklung in einen Bereich mit gegenüber angrenzenden Bereichen des ersten Stators verringerter Höhe, wobei die metallische Wicklung den für den Rotor vorgesehenen Bereich wenigstens über einen axialen Bereich, bevorzugt im Wesentlichen koaxial, umläuft,
- Positionieren des ersten Stators wenigstens in einem Formschluss mit dem zweiten Stator, wobei hierbei eine definierte Winkelpositionierung des ersten Stators und des zweiten Stators zueinander erfolgt, indem wenigstens ein stirnseltig in einem Statorpolträger des ersten Stators befindlicher Vorsprung und/oder Aussparung In korrespondierende Position mit jeweils einer stirnseitig in einem Statorpolträger des zweiten Stators befindlichen Aussparung und/oder Vorsprung gebracht werden.

In einer Ausbildung des Verfahrens ist vorgesehen, dass wenigstens ein erstes Statorpaar und ein zweites Statorpaar wenigstens in Formschluss hintereinander positioniert werden. Hierbei erfolgt eine definierte Winkelpositionierung des ersten Statorpaars und des zweiten Statorpaars, indem wenigstens ein stirnseitig in einem Statarpolträger des ersten Stators befindlicher als Außenvorsprung ausgebildeter Vorsprung und/oder als Außenaussparung ausgebildete Aussparung In korrespondierende Position mit jeweils einer stirnseitig In einem Statorpolträger des zweiten Stators befindlichen als Außenaussparung ausgebildeten Aussparung und/oder als Außenvorsprung ausgebildeten Vorsprung gebracht werden.

In einer weiteren Ausbildung des Verfahrens kann vorgesehen sein, dass die Wicklung vor dem Positionieren gewickelt ist.

Ein Positionieren einer metallischen Wicklung In einem Bereich mit gegenüber angrenzenden Bereichen des ersten Stators verringerter Höhe, wobei die metallische Wicklung vor dem Positionieren gewickelt ist, bewirkt den Vorteil, dass die Phasenwinkel für die gemäß üblicher mit einer Längsrichtung entlang einer Axialrichtung einer vorher erfolgten Wicklung keine Rolle mehr spielt. In der Folge Ist aufwändige Wickeltechnik, wie beispielsweise Nadelwickeltechnik und/oder Flyerwickeltechnik, nicht mehr erforderlich. Desweiteren ist aufgrund der nunmehr vereinfachten nutzbaren Wickeltechnik ein deutlich höherer Füllgrad des für die Wicklung verwendeten Material erreichbar, Während bei herkömmlichen Techniken ein solcher Füllgrad üblicherweise ungefähr zwischen Werten von 40 % und 50 % erreichbar ist, besteht in dem hier beanspruchten Verfahren die Möglichkeit, einen Füllgrad an für die Wicklung verwendetem Material zu erreichen, welcher beträchtlich höher ist und bis zu etwa 90 % erreichen kann. Desweiteren ist aufgrund der nicht mehr notwendigen Wickelköpfe möglich, dass kein Drahtschutz an den äußeren Kanten der Wicklung mehr erforderlich ist.

Desweiteren betrifft ein weiterer Gedanke der Erfindung eine Verwendung eines Verfahrens zum Zusammenbauen einer rohrförmigen elektrischen Maschine zur skalierten Konstruktion einer elektrischen Maschine unter Verwendung eines Stators. Bevorzugt wird eine Ausbildung der elektrischen Maschine und/oder des Stators gemäß den obenstehenden Erläuterungen hierfür verwendet, In einer Ausbildung wird die Verwendung zur Konstruktion eines Transversalflussgenerators genutzt. In einer weiteren Ausbildung ist vorgesehen, dass die Verwendung zur Konstruktion eines Transversalflussmotors genutzt wird.

Beispielsweise kann bei Verwendung von gleichen Statorpaaren und/oder gleichen Statoren eines skalierte Konstruktion einer elektrischen Maschine erreicht werden. Bei einer Konstruktion einer elektrischen Maschine durch Hintereinanderanordnung von Statorpaaren in beliebiger Anzahl kann beispielsweise bewirkt werden, dass die Länge der elektrischen Maschine entsprechend einer gewünschten Leistung beliebig gewählt wird, die radialen Auslegungen beziehungsweise bei Verwendung von kreiszylindrischen Statoren der Durchmesser der elektrischen Maschine hingegen unverändert bleibt.

Weitere vorteilhafte Ausgestaltungen und Weiterbildungen gehen aus den nachfolgenden Figuren hervor. Die aus den einzelnen Figuren hervorgehenden Einzelheiten und Merkmale sind jedoch nicht auf die jeweilige Figur beschränkt. Vielmehr können ein oder mehrere Merkmale mit einem oder mehreren Merkmalen aus verschiedenen Figuren, wie auch mit aus der obigen Beschreibung hervorgehenden Merkmalen zu neuen Ausgestaltungen verknüpft werden. Insbesondere dienen die nachfolgenden Ausführungen nicht als Beschränkung des jeweiligen Schutzbereichs, sondern erläutern Einzelmerkmale sowie ihr mögliches Zusammenwirken untereinander.

### Bezugszelchen

- 1: Stator
- 1': erster Stator
- 1": zweiter Stator
- 2: Durchbruch
- 3: Statorpolträger
- 4: erster Statorpol
- 5: erste Flanke
- 6: zweite Flanke
- 7: zweiter Statorpol
- 8', 8": weitere Statorpole
- 9: Mittelachse
- 10: Höhenbereich
- 11: Strebe
- 12: Verjüngung
- 13: obere Stirnseite
- 14: Aussparung
- 15: Vorsprung
- 16: Rotor
- 17: Wicklung
- 18: erste Krümmungslinie
- 19: zweite Krümmungslinie
- 20: dritte Krümmungslinie
- 21: elektrische Maschine
- 22: hartmagnetischer Bereich
- 23: Ergänzungswinkel zum Abschrägewinkel
- 24: als Außenaussparung ausgebildete Aussparung
- 25: als Außenvorsprung ausgebildeter Vorsprung

Es zeigen:
- Fig. 1: Ansicht einer Ausgestaltung eines Stators in einem Schnitt entlang einer eine Mittelachse des Stators enthaltenen Ebene,
- Fig. 2: Abschnitt eines Bereichs des in Fig. 1 gezeigten Stators in einem Schnitt,
- Fig. 3: Schrägaufsicht einer Ausgestaltung des Stators mit gegenüber einer jede Mittelachse des Stators enthaltenden Ebene gekrümmten Statorpolen,
- Fig. 4: Detailansicht des in Fig. 3 gezeigten Stators,
- Fig. 5: Explosionsdarstellung einer elektrischen Maschine aus einem Statorpaar, einem Rotor sowie einer Wicklung,
- Fig. 6a-c: Darstellung verschiedener elektrischer Maschinen in der Ausgestaltung jeweils einer rohrförmigen elektrischen Maschine:
a) eine rohrförmige elektrische Maschine umfassend drei Statorpaare,
b) eine rohrförmige elektrische Maschine umfassend sechs Statorpaare,
c) eine rohrförmige elektrische Maschine umfassend neun Statorpaare,
Fig. 7a-b ein erster Stator und ein zweiter Stator.

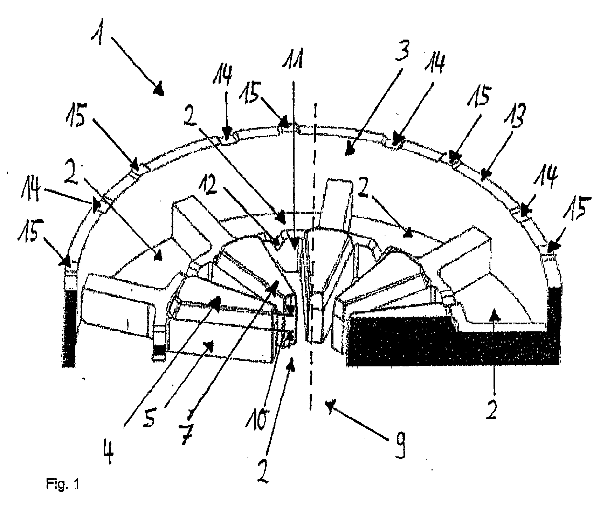

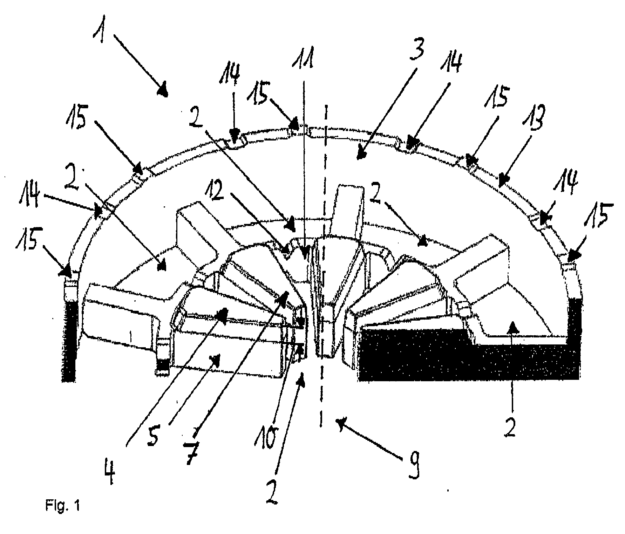

In Fig. 1 ist eine Ansicht eines Stators 1 in einem Schnitt entlang einer Ebene gezeigt, welche die Mittelachse 9 des Stators 1 enthält. In der gezeigten Ausgestaltung ist der Stator 1 als mit Durchbrüchen 2 versehener scheibenähnlicher Körper ausgebildet. Der Stator 1 verfügt über einen als Statorpolträger 3 ausgebildeten Bereich, welcher in dem gezeigten Ausführungsbeispiel gleichzeitig auch einen Außenumfang des Mantels des Stators 1 umfasst. In der gezeigten Ausgestaltung umschreibt der Außenumfang des Mantels das Stators 1 im Wesentlichen eine Kreisfläche, so dass die Mittelachse 9 des Stators 1 den Mittelpunkt dieses Kreises schneidet und mit der Rotationsache eines Rotors 16 der elektrischen Maschine zusammenfällt. Ausgehend von einer Innenfläche des Statorpolträgers 3 sind an dem Statorpolträger 3 ein erster Statorpol 4 mit einer ersten Flanke 5 und einer, in der gezeigten Abbildung nicht sichtbaren, zweiten Flanke 6 sowie ein zweiter Statorpol 7 gemeinsam mit weiteren Statorpolen 8', 8" angeordnet. Alle Statorpole sind in der gezeigten Ausgestaltung des Stators 1 in regelmäßiger Anordnung angeordnet, indem die Winkel zwischen den die Mittelachse 9 des Stators umfassenden Symmetrleebenenen benachbarter Statorpole jeweils gleich sind. Die Statorpole sind In Richtung der Mittelachse 9 weisend gerichtet orientiert. Der gezeigten Ausbildung ist zu entnehmen, dass sowohl die erste Flanke 5 als auch die zweite Flanke 6 des ersten Statorpols 4 in einem Höhenbereich 10 abgeschrägt sind, wobei die Abschrägung von der, bei Betrachtung in der gezeigten Orientierung, oberen Stirnseite nach außen verlaufen. Die Abschrägungen sind in der gezeigten Ausgestaltung als schräge Ebenen ausgeführt, welche zu den nicht abgeschrägten Ebenen der jeweiligen Flanke mit einem diskreten Übergang übergehen, In der gezeigten Ausgestaltung sind die Statorpole gleich ausgebildet und unterscheiden sich nur In ihrer Orientierung. Der erste Statorpol, der zweite Statorpol wie auch die übrigen Statorpole sind Jeweils ebenensymmetrisch zu genau einer die Mittelachse des Stators enthaltenden Ebene, weisen also keine Krümmung auf. In der gezeigten Ausgestaltung weisen die Statorpole somit keinen von einer ebenensymmetrischen Ausgestaltung abweichenden Verlauf auf. Wie Fig. 1 weiterhin zu entnehmen ist, ist in der gezeigten Ausgestaltung des Stators zwischen jeweils zwei Statorpolen jeweils eine Strebe 11 angeordnet, welche die Mittelachse 9 in koaxialem Umlauf teilweise umläuft. Die gezeigte Streben 11 weisen jeweils eine Verjüngung 12 auf. An der oberen Stirnseite 13 des Statorpolträgers sind zum einen Aussparungen 14 sowie zum anderen Vorsprünge 15 angeordnet, wobei einem die Mittelachse 9 umlaufenden Verlauf folgend Aussparungen 14 und Vorsprünge 15 jeweils abwechselnd angeordnet sind. Gleichartig ausgebildete Aussparungen 14 und Vorsprünge 15 sind auf der gegenüberliegenden Stirnseite ebenfalls angeordnet; diese sind der gezeigten Ansicht jedoch nicht zu entnehmen.

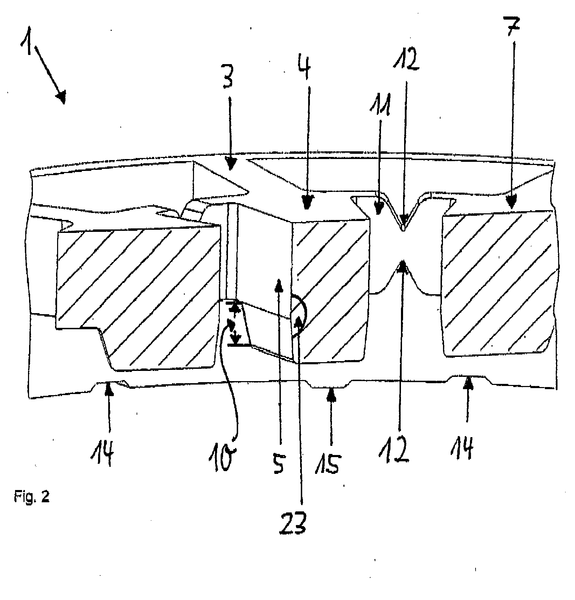

Der Fig. 2 ist ein Abschnitt eines Bereichs des in Fig. 1 gezeigten Stators gezeigt in einem Schnitt gezeigt. Der Schnitt verläuft hierbei mit einer zur Symmetrieebene des mittleren der drei gezeigten Statorpole senkrechten Ebene. Neben einer detaillierteren Ansicht der erkennbaren und bereits in Fig. 1 gezeigten Merkmale ist der Fig. 2 noch der Ergänzungswinkel 23 zum Abschrägewinkel in entsprechend perspektivischer Ansicht zu entnehmen. Der Abschrägewinkel beträgt in der hier gezeigten Ausgestaltung des stators bei allen Statorpolen und jeweils an beiden Flanken der Statorpole 0,9°, so dass der Ergänzungswinkel 23 entsprechend 179,1° groß Ist.

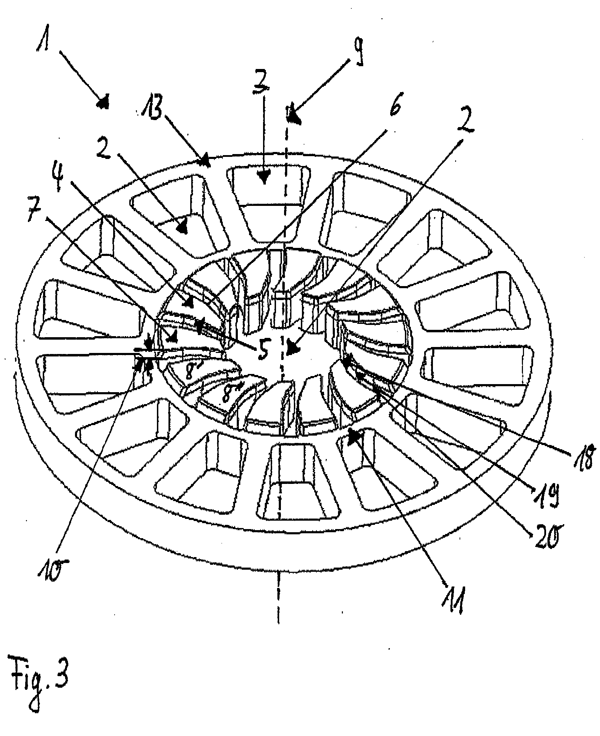

Die in Fig. 3 gezeigte Ausbildung eines Stators 1 unterscheidet slch von der In Fig. 1 gezeigten Ausbildung eines Stators 1 unter anderem dahingehend, dass der erste Statorpol 4, der zweite Statorpol 7 wie auch alle anderen Statorpole gekrümmt sind. In der Folge sind die Statorpole gegenüber jeder die Mittelachse 9 enthaltenden Achse asymmetrisch. Hierbei krümmt der Statorpol sich mit zunehmendem Abstand eines jeweiligen Statorpols von dem Statorpolträger 3 von dieser Ebene im Wesentlichen fortbiegend. Die Krümmung der Statorpole ist hierbei in der gezeigten Ausbildung nicht in kontinuierlicher Entwicklung, sondern an einer ersten Krümmungslinie 18, einer zweiten Krümmungslinie 19 sowie einer dritten Krümmungslinie 20 diskret ausgeführt. Als ein weiterer Unterschled zu der in Fig. 1 gezeigten Ausbildung weist der Stator in der in Fig. 3 gezeigten Ausbildung keine Verjüngung 12 der Strebe 11 auf.

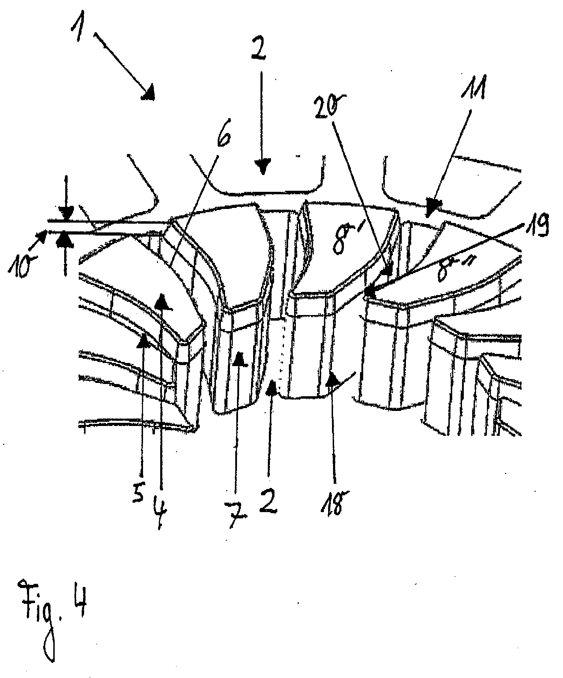

In Fig. 4 ist ein Ausschnitt aus Fig. 3 zur Verdeutlichung In vergrößerter Form gezeigt.

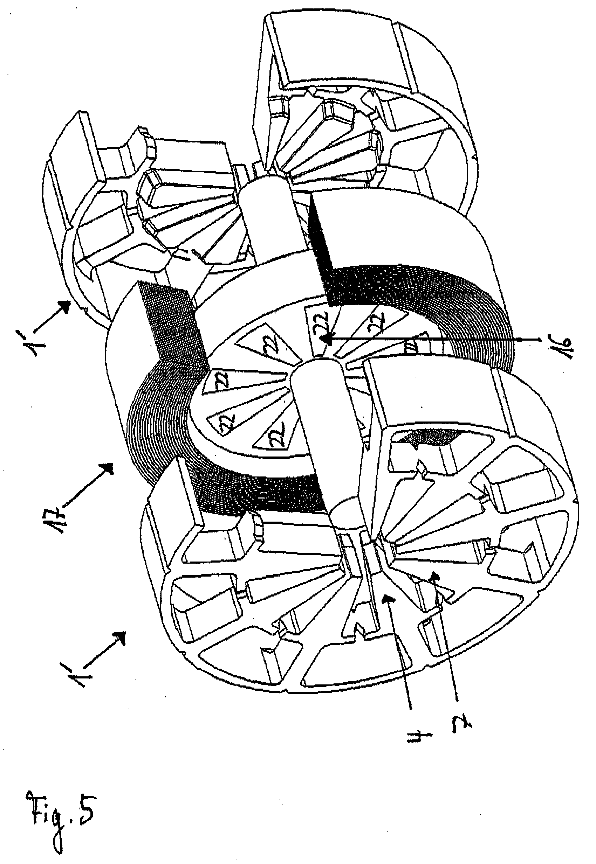

Der Fig. 5 Ist eine elektrische Maschine 21 aus einem Statorpaar aus einem ersten Stator 1' und einem zweiten Stator 1", einem Rotor 16 sowie einer Wicklung 17 in Explosionsdarstellung zu entnehmen. Durch den ersten Stator 1' und den zweiten Stator 1" wird ein Hohlraum gebildet, welcher zum einen der Aufnahme des Rotors 16 dient und zum anderen einer Aufnahme der Wicklung 17 dient. Der erste Stator 1' und der zweite Stator 1" sind hierbei ähnlich dem in Fig. 1 gezeigten Stator konstruiert. In dem Bereich zwischen den Streben 11 und dem Statorpolträger 3 ist entlang einer zur Axialrichtung paralleien Richtung die Höhe gegenüber den benachbarten Bereichen, welche hier als Streben 11 und als Statorpolträger 3 ausgebildet sind, die Mittelachse 9 vollständig umlaufend verringert. Die verringerte Höhe ist in dem gezeigten Ausbildungsbeispiel hierbei als die Mittelachse 9 des Stators 1 vollständig umlaufende Nut ausgebildet. Der hierdurch entstehende Hohlraum dient der Aufnahme der Wicklung 17, deren Erstreckung in einer zur Axialrichtung parallelen Richtung diejenige Erstreckung des Rotors 16 überragt. Als weiteres ist der Fig. 5 zu entnehmen, dass der erste Statorpol 4, der zweite Statorpol 7, sowie die übrigen, nicht mit Bezugszeichen versehenen Statorpole in Bereichen ihrer Ausdehnung in einem stirnseitigen Schnitt mit den hartmagnetischen Bereichen 22 korrespondieren. Die Korrespondenz ist hierbei dahingehend ausgebildet, dass die Flächen in dem stirnseitigen Schnitt bereichsweise deckungsgleich sind. Diese Deckungsgleichheit der Flächen der Statorpole im stirnseitigen Schnitt mit den Flächen der hartmagnetischen Bereiche in Kombination mit der Abschrägung der ersten Flanke 5 und der zweiten Flanke 6 des ersten Statorpols 4 und In analoger Welse der Flanken der übrigen Statorpole führte im Betrieb der elektrischen Maschine zu einer Generierung eines nahezu perfekt sinusförmigen Spannungsverlaufs.

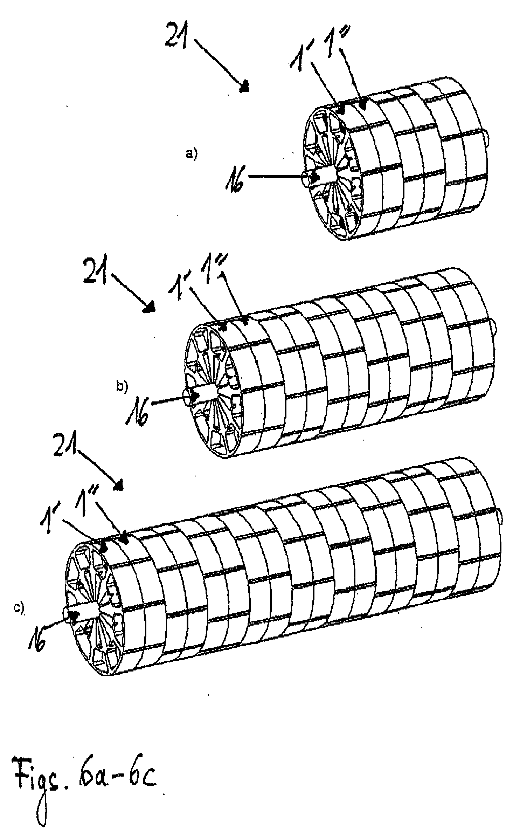

In Fig. 6 sind verschiedene elektrische Maschinen 21 aus einer Anzahl von Statorpaaren In einem zusammengebauten Zustand gezeigt. In Fig. 6a) ist eine elektrische Maschine 21 aus drei Statorpaaren gezeigt mit einem ersten Statorpaar aus einem ersten Stator 1' und einem zweiten Stator 1" und entsprechend zwei weiteren Statoren. Die Statorpaare sind hierbei entsprechend einer gewünschten Phasenverschiebung gegeneinander verdreht. In Fig. 6b ist eine elektrische Maschlne 21 aus sechs Statorpaaren gezeigt, wobei die gezeigte Ausbildung der elektrischen Maschine 21 durch Hintereinanderanordnung der in Fig. 6a) gezeigten Ausbildung der elektrischen Maschine ausgebildet ist, In analoger Weise ist in Fig. 6c) eine Ausbildung einer elektrischen Maschine 21 aus drei hintereinander angeordneten Statorpaaren, wie sie in Fig. 6a) gezeigt sind, abgebildet. Die drei in Fig. 6 gezeigten Beispiele demonstrieren somit, wie aus einer Hintereinanderanordnung von Statorpaaren eine skalierte Konstruktion einer elektrischen Maschine 21 ermöglicht ist.

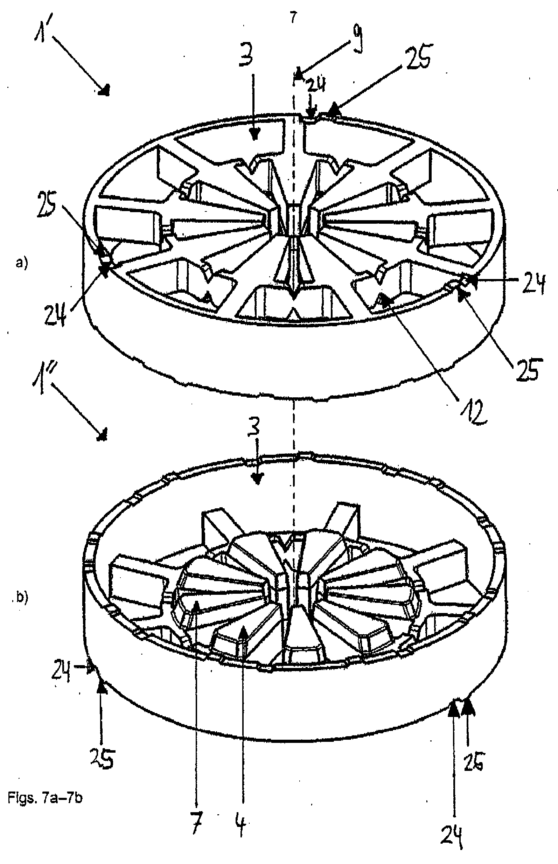

In Fig. 7a und Fig. 7b sind zwei Statoren, ein erster Stator 1' und ein zweiter Stator 1" gezeigt, welche dem in Fig. 1 gezeigten Stator ähnlich sind. Die Bezugszeichen entsprechen somit den unter Fig. 1 gezeigten Erläuterungen. Der In Fig. 7a und der in Fig. 7b gezeigte Stator sind in ihrer Form identisch. Auf ihren beiden abgewandten Seiten weisen beide Statoren jeweils drei Paare von Aussparungen und Vorsprüngen auf, die als Außenaussparung 24 und Außenvorsprung ausgebildet sind. Nach einem Fügen des in Fig. 7a gezeigten ersten Stators 1' mit dem in Fig. 7b gezeigten zweiten Stator 1" kann das dann entstandene Paar mit den Paaren von Außenaussparung 24 und Außenvorsprung 25 jeweils in zumindest auch formschlüssiger Verbindung mit Identischen Statorpaaren gefügt werden. Aufgrund der im Winkel von (360/3)° zueinander drehorientierten Anordnung von Paaren von Außenaussparung 24 und Außenvorsprung 25 sowie der in diesem Beispiel gezeigten Ausgestaltung der Statoren als Statoren mit jeweil 9 Statorpolen, welche mit (360/9)° zueinander drehorientierter Ausrichtung angeordnet sind, führt in dem gezeigten Beispiel eine beliebige mögliche Anordnung von Statoren in jedem Fall zu einer gewünschten Winkelorientierung der Statoren eines Statorpaars einerseits sowie mehrerer Statorpaare zueinander andererseits.

## Patentansprüche

1. Stator (1, 1', 1") für eine, bevorzugt reversibel, zusammensetzbare elektrische Maschine (21) mit wenigstens einem Rotor (16), wobei der Stator (1,1', 1") als mit wenigstens einem Durchbruch (2) versehener Körper ausgebildet ist, der wenigstens einen ferromagnetischen Werkstoff aufweist, und wobei der Stator (1, 1', 1") weiterhin aufweist:
- wenigstens einen als Statorpolträger (3) ausgebildeten Bereich, welcher wenigstens teilweise eine Mittelachse (9) des Stators (1, 1', 1") umringt,
- wenigstens einen ersten Statorpol mit wenigstens einer ersten Flanke (5) und einer zweiten Flanke (6), sowie
- wenigstens einen zweiten Statorpol (7),
wobei
die Statorpole, bevorzugt im Wesentlichen entlang einer Radialrichtung weisend gerichtet, unmittelbar oder mittelbar an dem Statorpolträger (3) angeordnet sind.

2. Stator (1, 1', 1") nach Anspruch 1, **dadurch gekennzeichnet, dass** der erste Statorpol (4) zu jeder die Mittelachse (9) des Stators (1, 1', 1") enthaltenden Ebene asymmetrisch ist und mit zunehmendem Abstand von dem Statorpolträger (3) sich von dieser Ebene Im Wesentlichen fortbiegend gekrümmt ist.

3. Stator (1,1', 1") nach Anspruch 1 oder nach Anspruch 2, **dadurch gekennzeichnet, dass** die erste Flanke (5) und/oder die zweite Flanke (6) über wenigstens einen Höhenbereich (10) des ersten Statorpols (4) gegenüber der Mittelachse (9) des Stators (1, 1', 1"), abgeschrägt ist, wobei die Abschrägung in diskretem oder kontinuierlichem Verlauf oder einer Kombination aus beidem ausgebildet ist.

4. Stator (1, 1', 1") nach einem der vorhergehenden Ansprüche, **dadurch gekennzeichnet, dass** der erste Statorpol (4) mit wenigstens einer stirnseitigen Schnittfläche mit wenigstens einer stirnseitigen Schnittfläche eines hartmagnetischen Bereichs des Rotors (16) korrespondiert.

5. Stator (1, 1', 1") nach einem der vorhergehenden Ansprüche, **dadurch gekennzeichnet, dass** die Dichte des Stators (1, 1', 1") ortsabhängig eingestellt ist für eine Bereitstellung eines eingestellt ortsabhängigen magnetischen Widerstands.

6. Stator (1, 1', 1") nach einem der vorhergehenden Ansprüche, **dadurch gekennzeichnet, dass** ein die Mittelachse (9) wenigstens teilweise umringender Bereich des Stators (1, 1', 1 ") eine gegenüber wenigstens einem an diesen Bereich angrenzenden Nachbarbereich verringerte Höhe zur zumindest tellwelsen Aufnahme von wenigstens einer Wicklung (17) aufweist.

7. Stator (1, 1', 1 ") nach einem der vorhergehenden Ansprüche, **dadurch gekennzeichnet, dass** der Statorpolträger (3) des Stators (1, 1', 1") wenigstens bereichsweise wenigstens eine, bevorzugt im Wesentlichen in eine zur Mittelachse (9) parallelen Richtung orientierte, Aussparung (14) und/oder wenigstens einen, bevorzugt in eine im Wesentlichen zur Mittelachse (9) parallelen Richtung orientierten, Vorsprung (15) aufweist.

8. Stator (1, 1', 1") nach einem der vorhergehenden Ansprüche, **dadurch gekennzeichnet, dass** wenigstens der erste Statorpol (4) und der zweite Statorpol (5) über wenigstens eine Strebe (11) miteinander verbunden sind, und dass die Strebe (11) die Mittelachse (9) des Stators (1, 1', 1"), bevorzugt im Wesentlichen koaxial, wenigstens teilweise umlaufend angeordnet ist, und wobei die Strebe (11) wenigstens abschnittsweise in eine zur Mittelachse (9) im Wesentlichen parallelen Richtung eine Verjüngung (12) aufweist und/oder wobei die Strebe (11) wenigstens abschnittsweise über eine gegenüber angrenzenden Bereichen der Strebe (11) verringerte Dichte aufweist.

9. Stator (1, 1', 1") nach einem der vorhergehenden Ansprüche, **dadurch gekennzeichnet, dass** eine Winkelverteilung der Statorpole, eine Ausgestaltung der Statorpole und/oder eine Verteilung der Dichte der Statorpole entsprechend eines gewünschten Drehmomentverlaufs während des Verlaufs einer Umdrehung des Rotors (16) eingestellt ist.

10. Stator (1, 1', 1") nach einem der vorhergehenden Ansprüche, **dadurch gekennzeichnet, dass** der Stator (1, 1', 1") pulvermetallurgisch aus einem weichmagnetischen Material, bevorzugt aus einem SMC-Werkstoff, bevorzugt einstückig, hergestellt ist.

11. Stator (1, 1', 1") nach einem der vorhergehenden Ansprüche, **dadurch gekennzeichnet, dass** wenigstens bereichsweise innerhalb eines zwischen zwei benachbarten Statorpolen befindlichem Raums ein austenltisches Material, bevorzugt ein austenitischer CrNi-Stahl, angeordnet ist.

12. Elektrische Maschine, umfassend wenigstens ein Statorpaar aus einem ersten Stator (1, 1', 1") und einem zweiten Stator (1, 1', 1"), bevorzugt jeweils nach einem der Ansprüche 1 bis 11, wenigstens einen in einem durch den ersten Stator (1, 1', 1") und den zweiten Stator (1, 1', 1") gebildeten Hohlraum befindlichen ersten Rotor (16), wenigstens eine zumindest in einem Bereich einer Höhe des Rotors (16) den Rotor (16) umlaufende metallische Wicklung (17), wobei der erste Stator (1, 1', 1") und der zweite Stator (1,1', 1") relativ zueinander durch wenigstens einen stirnseitig in einem Statorpolträger (3) des ersten Stators (1, 1', 1") befindlichen Vorsprung (15) und/oder Aussparung (14) in Zusammenwirkung mit korrespondierenden stirnseitig in einem Statorpolträger (3) des zweiten Stators (1, 1', 1 ") befindlichen Vorsprüngen (15) und/oder Aussparungen (14) zueinander winkelpositioniert sind.

13. Elektrische Maschine nach Anspruch 12, **dadurch gekennzeichnet, dass** eine Anzahl von wenigstens zwei, bevorzugt zwei gleichen, Statorpaaren hintereinander angeordnet ist, und wobei das erste Statorpaar und das zweite Statorpaar relativ zueinander durch wenigstens einen stirnseitig in einem Statorpolträger (3) des ersten Statorpaars befindlichen als Außenvorsprung ausgebildeten Vorsprung und/oder als Außenaussparung ausgebildete Aussparung in Zusammenwirkung mit korrespondierenden stlrnseltig in einem Statorpolträger (3) des zweiten Statorpaars befindlichen als Außenvorsprüngen ausgebildeten Vorsprüngen und/oder als Außenaussparungen ausgebildeten Aussparungen zueinander winkelpositioniert sind, und wobei die Winkelpositionierung zwischen dem ersten Statorpaar und dem zweiten Statorpaar entsprechend einer gewünschten Phasenverschiebung gewählt ist.

14. Elektrische Maschine nach Anspruch 12 oder Anspruch 13, **dadurch gekennzeichnet, dass** die Wicklung (17) in Ringwicklung ausgeführt ist, weitgehend, bevorzugt vollständig, frei von Isoliermaterial ist und/oder dass die Wicklung (17) nahezu keine, bevorzugt keine, Wickelköpfe aufweist.

15. Elektrische Maschine nach einem der Ansprüche 12 bis 14, wobei der erste Stator (1") und der zweite Stator (1") eine gleiche Gestalt aufweisen.

16. Verfahren zum Zusammenbauen einer, bevorzugt rohrförmigen, elektrischen Maschine mittels wenigstens einem Zusammenbauen eines Statorpaars, indem wenigstens die folgenden Schritte erfolgen:
- Positionieren eines Rotors (16) in einen Hohlraum eines ersten Stators (1'),
- Positionieren einer metallischen Wicklung (17) in einen Bereich mit gegenüber angrenzenden Bereichen des ersien Stators (1') verringerter Höhe, wobei die metallische Wicklung (17) den für den Rotor (16) vorgesehenen Bereich wenigstens über einen axialen Bereich, bevorzugt im Wesentlichen koaxial, umläuft,
- Positionieren des ersten Stators (1') wenigstens in einem Formschluss mit dem zweiten Stator (1"), wobei hierbei eine definierte Winkelpositionierung des ersten Stators (1') und des zweiten Stators (1") zueinander erfolgt, indem wenigstens ein stirnseitig in einem Statorpolträger (3) des ersten Stators (1') befindlicher
Vorsprung (15) und/oder Aussparung (14) In korrespondierende Position mit jeweils einer stirnseitig in einem Statorpolträger (3) des zweiten Stators (1") befindlichen Aussparung (14) und/oder Vorsprung (15) gebracht werden.

17. Verfahren nach Anspruch 16, wobei wenigstens ein erstes Statorpaar und ein zweites Statorpaar wenigstens in Formschluss hintereinander positioniert werden, wobei hierbei eine definierte Winkelpositionierung des ersten Statorpaars und des zweiten Statorpaars erfolgt, indem wenigstens ein stirnseitig in einem Statorpolträger (3) des ersten Stators (1') befindlicher als Außenvorsprung ausgebildeter Vorsprung und/oder als Außenaussparung ausgebildete Aussparung in korrespondierende Position mit jeweils einer stirnseitig in einem Statorpolträger (3) des zweiten Stators (1") befindlichen als Außenaussparung ausgebildeten Aussparung und/oder als Außenvorsprung ausgebildetem Vorsprung gebracht werden.

18. Verfahren nach Anspruch 16 oder nach Anspruch 17, **dadurch gekennzeichnet, dass** die Wicklung (17) vor dem Positionieren gewickelt ist.

19. Verwendung eines Verfahrens nach einem der Ansprüche 16 bis 18 zur skalierten Konstruktion einer elektrischen Maschine, bevorzugt eines Transversalflussgenerators oder eines Transversalflussmotors, bevorzugt nach einem der Ansprüche 12 bis 15, unter Verwendung eines Stators (1, 1', 1") nach einem der Ansprüche 1 bis 11.
